**Europäisches Patentamt**

**European Patent Office**

**Office européen des brevets**

(19)

(11) Veröffentlichungsnummer: **0 201 847**

**A2**

(12)

# EUROPÄISCHE PATENTANMELDUNG

(21) Anmeldenummer: **86106179.4**

(22) Anmeldetag: **06.05.86**

(51) Int. Cl.⁴: **B 65 G 11/12**
**B 65 G 11/14**

(30) Priorität: **14.05.85 DE 3517326**
**10.09.85 DE 3532217**

(43) Veröffentlichungstag der Anmeldung:
**20.11.86 Patentblatt 86/47**

(84) Benannte Vertragsstaaten:
**AT BE CH DE FR GB IT LI LU NL SE**

(71) Anmelder: **Albert Böcker GmbH & Co. KG**
**Waldstrasse 1**
**D-4712 Werne(DE)**

(72) Erfinder: **Böcker, Albert**
**Im Thünen 28**
**D-4712 Werne(DE)**

(54) **Aus mehreren teleskopierbaren Rutschenschüssen gebildete Schuttrutsche.**

(57) Die Erfindung betrifft eine Schuttrutsche für den Transport von Abraum vom Dachbereich eines Gebäudes zum Boden. Die Schuttrutsche besitzt einen etwa bis zur Traufe reichenden vertikal verlaufenden und einen daran anschließenden, entsprechend der Dachneigung abgewinkelten Teil. Das Wesen der Erfindung besteht darin, daß der abwinkelbare Teil der Schuttrutsche mittels einer vom Boden bedienbaren Winde über eine Winkeleinstellvorrichtung in beliebigen Winkelstellungen festlegbar ist. Ein weiteres Merkmal liegt in der oberseitig offenen, rinnenartigen Ausbildung der auf dem Dach aufliegenden Rutschenschüsse.

EP 0 201 847 A2

./...

FIG.1

Patentanmeldung

der

Firma
Albert Böcker GmbH & Co.KG
4712 Werne

---

Aus mehreren teleskopierbaren Rutschenschüssen
gebildete Schuttrutsche

---

Die Erfindung betrifft eine aus mehreren teleskopierbaren
Rutschenschüssen gebildete Schuttrutsche für den Transport von Abraum vom Dachbereich über die Traufe zum
Boden.

Es ist eine Material- oder Schuttrutsche bekannt geworden,
die auf einem Fahrgestell verfahrbar ist und deren einzelne Rutschenschüsse teleskopierbar ineinandergesteckt sind.
Die Verschiebung der einzelnen Teilstücke des Teleskopauslegers (Rutschenschüsse) erfolgt mittels eines Seilantriebes und einer oder mehrerer motorisch oder von Hand angetriebener Winden (DE-OS 29 19 781).

Durch den Prospekt der Anmelderin "Schuttrutschenprogramm",
Seiten 14 - 19 ist eine der vorbeschriebenen DE-OS 29 19
781 entsprechende Schuttrutsche bekannt geworden, die an ihrem oberen freien Ende des letzten teleskopierbaren Schusses einen Aufnahmetrichter aufweist, in den der Abraum eingefüllt werden kann.

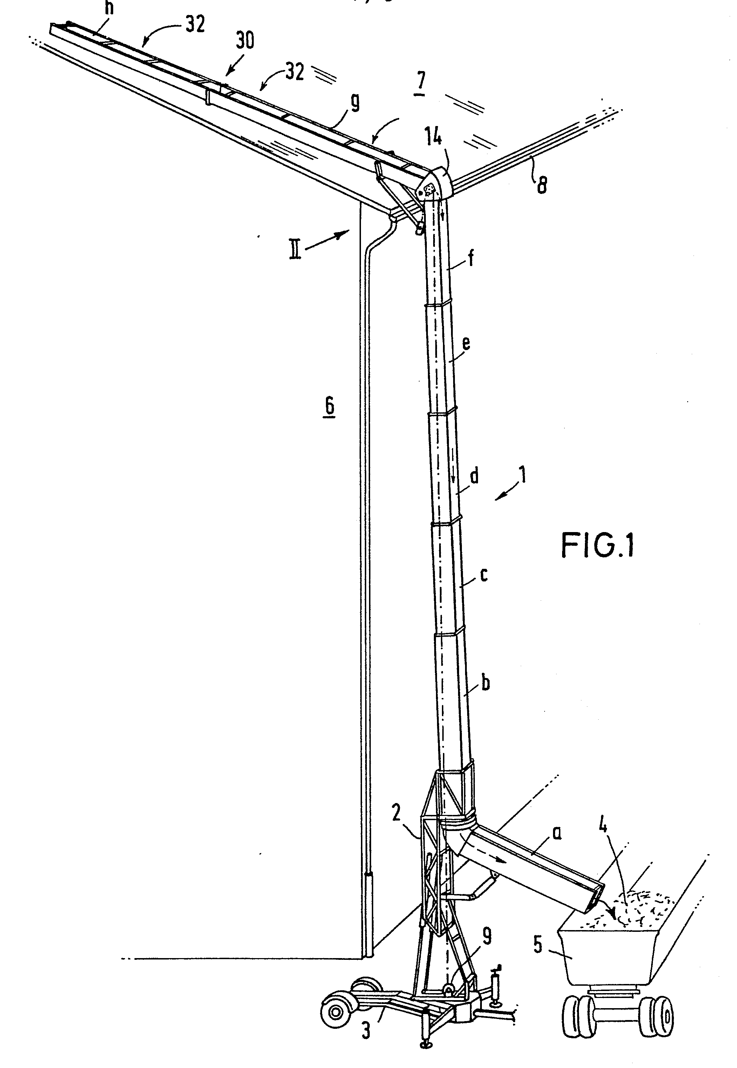

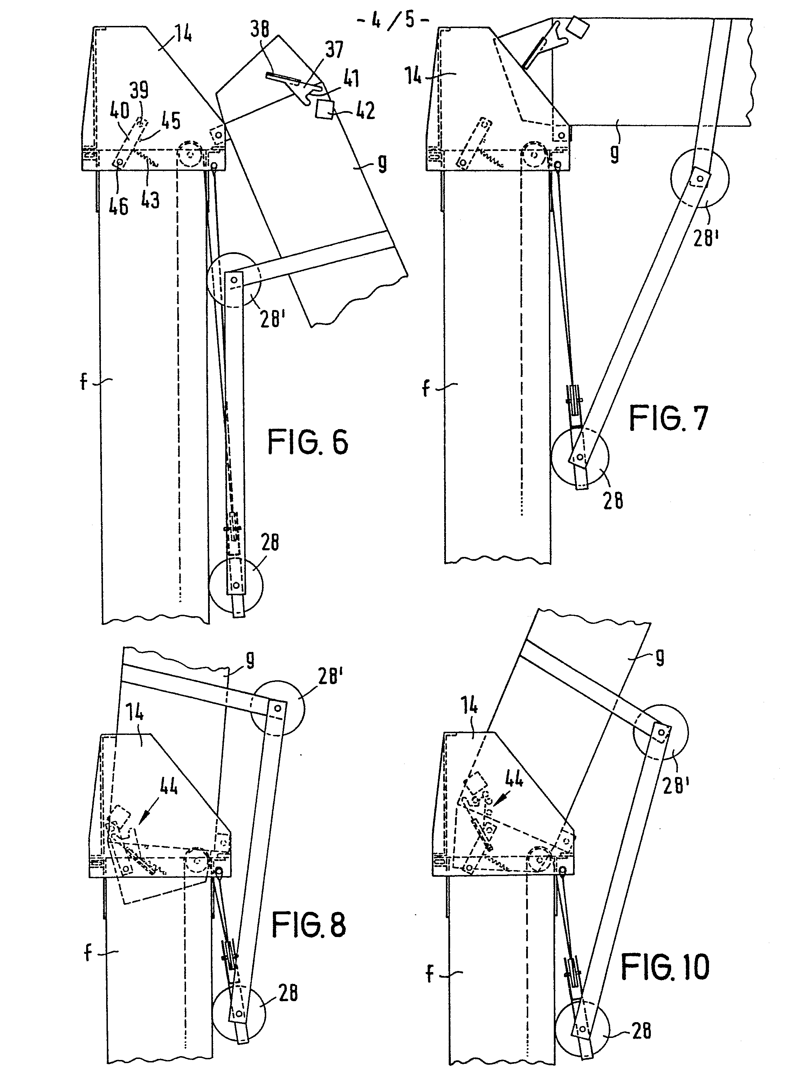

Aus den Abb. 1, 3 und 4 des gleichen Prospektes ist eine Schuttrutsche bekannt geworden, die aus einzelnen miteinander verschraubbaren Rutschenstücken besteht, wobei eine Verlegung eines abgeknickten Bereiches über das Dach entsprechend der Dachneigung durch zwischengeschraubte Kniestücke ermöglicht wird. Abb. 6 des gleichen Prospektes zeigt eine aus zwei unverbundenen Teilen bestehende Schuttrutsche, deren oberes Teil entsprechend der Dachneigung verlegt ist und mit dem unteren Ende in einen oberen Aufnahmetrichter des anderen Teiles eingesteckt ist. Zwischen dem oberen Teil und dem unteren Teil dieser Schuttrutsche besteht keine Verbindung.

Aufgabe der Erfindung ist es, ausgehend von einem Std. d. T. nach der DE-OS 29 19 781, eine teleskopierbare Schuttrutsche dahingehend weiter zu entwickeln, daß sie mit einer über das Dach verlaufenden Verlängerung, wie aus dem vorbeschriebenen Prospekt an sich bekannt, versehen ist, daß jedoch das Installieren dieser Verlängerung auf dem Dach weniger zeit- und arbeitsaufwendig erfolgt, d.h. daß schwierige Montagearbeiten im Bereich insbesondere der Traufe entfallen.

Die Erfindung löst die gestellte Aufgabe bei einem Rutschenschuß der eingangs genannten Gattung dadurch, daß wenigstens ein oberer Rutschenschuß gegenüber dem unterseitig daran anschließenden Rutschenschuß mittels einer vom Boden bedienbaren Winde abwinkelbar und der Knickwinkel mittels der gleichen Winde über eine zwischen den beiden Rutschenschüssen angeordnete Winkeleinstellvorrichtung in beliebigen Winkelstellungen festlegbar ist.

Nach der erfindungsgemäßen Lösung kann somit mittels einer vom Boden bedienbaren Winde der Teil der Schuttrutsche, welcher der Dachneigung entsprechend abgewinkelt werden soll, vom am Boden befindlichen Bedienungsmann gegenüber dem übrigen Teil der Schuttrutsche abgewinkelt und auf das Dach aufgelegt werden.

Das bedeutet, daß während des Verfahrens der gesamten Schuttrutsche von einem Einsatzort zum anderen sämtliche teleskopierbaren Schüsse eingefahren sind - ggf. mit Ausnahme des oberen, abwinkelbaren Schusses, der in geeigneter Weise in eine parallel zu den teles- kopierbaren Schüssen verlaufende Verstauposition ge- bracht werden kann.

Die Abwinkelung zwischen den beiden benachbarten Rutschenschüssen erfolgt über eine Schwenkachse, die in Ausgestaltung der Erfindung in etwa in der Ebene der Unterseite der beiden zueinander abwinkelbaren Rutschenschüsse liegt, so daß der durch die Schwenkachse gebildete Drehpunkt von der Einstellvorrichtung ausgesteift wird.

Zur besseren Überleitung des Abraumes ebenso wie zum Zwecke der Verlagerung der Schwenkachse als auch der Verlagerung bestimmter Bauteile der Einstellvorrichtung dient ein Überleitknie, welches am oberen Ende des letzten etwa vertikal verlaufenden Rutschenschusses undrehbar, jedoch über Schraubverbindungen lösbar angeordnet ist. Diese Lösbarkeit ist zweckmäßig, damit die Schuttrutsche ggf. auch ohne einen abwinkelbaren Rutschenschuß und ohne Einstellvorrichtung benutzt werden kann. In diesem Falle wird an das obere Ende des letzten teleskopierbaren Rutschenschusses ein Einfülltrichter angesetzt.

Einzelheiten der Winkeleinstellvorrichtung ergeben sich aus den Lehren der Ansprüche 9 - 16 und 22. Hiernach wird die Einstellvorrichtung im wesentlichen durch eine Spreize gebildet, welche den Winkel zwischen den beiden abwinkelbaren Rutschenschüssen aussteift. Ein Ende dieser Spreize ist erfindungsgemäß drehbar, jedoch unverschieblich an einem der beiden zueinander abwinkelbaren Rutschenschüsse abgestützt; das andere Ende ist gleitend oder rollend an dem anderen Rutschenschuß geführt. Das gleitend oder rollend abgestützte Ende der Spreize kann mittels des von der Winde angetriebenen Seiles an dem zugeordneten Rutschenschuß entlanggeführt werden; da die Spreize praktisch eine Seite eines Dreiecks bildet, wird der Winkel zwischen den beiden anderen Seiten (d.h. also zwischen den beiden Rutschenschüssen) verändert und ist über das Windenseil in beliebigen Stellungen feststellbar.

Wenn gemäß den Ansprüchen 13 und 16 beide Enden der Spreize mit Druckrollen versehen sind, kann in der ersten Phase des Anhebens aus der Verstauposition sichergestellt werden, daß die obere Druckrolle zum einen als Schwenkbegrenzung zur Verhinderung des Überschreitens des Totpunktes dient, zum anderen übernimmt sie den Hauptandruck in dieser ersten Phase des Anhebens des abschwenkbaren Rutschenschusses. Dies ist besonders wichtig, wenn an dieser Stelle die Stösse der noch nicht teleskopierten Rutschenschüsse überfahren werden müssen.

Wird das Seil vollständig nachgelassen, legt sich der obere abwinkelbare Teleskopschuß in etwa in Parallelanordnung neben den unteren Teleskopschuß und befindet sich somit in einer Verstauposition, in der die gesamte Schuttrutsche verfahren werden kann.

Es wird ein Merkmal von eigenständiger Bedeutung darin gesehen, daß die Abstützung der Spreize am unteren Ende in einer pendelnd am Überleitknie und/oder dem oberen Rutschenschuß angeschlossenen Gleitführung zwangsgeführt ist; dies hat den Vorteil, daß das untere Ende der Spreize über die Gleitführung flächenartig abgestützt ist und die Stöße im eingefahrenen Zustand der einander überlappenden oberen Enden der Teleskopschüsse leichter überfahrbar sind.

Eine weitere erfindungswesentliche Ausgestaltung der Erfindung kennzeichnet sich durch die Ansprüche 17 - 21. Hiernach ist zwischen den beiden gegeneinander abschwenkbaren Rutschenschüssen eine Verriegelungsvorrichtung vorgesehen. Die Zuordnung dieser Verriegelungsvorrichtung hat den Vorteil, daß der abschwenkbare Teil der Schuttrutsche bereits aufgerichtet werden kann, wenn die unterseitig daran anschließenden Teleskopschüsse noch eingefahren sind.

Bekanntlich werden derartige Rutschen im teleskopierten Zustand in ihrer Gebrauchssituation schräg gegen ein Gebäude oder dgl. geneigt; dabei besteht im Bereich der Dachtraufe keine gute Möglichkeit, den abschwenkbaren Teil der Rutsche hochzuschwenken. Es ist deshalb außerordentlich vorteilhaft, wenn dies bereits im erdnahen Bereich durchgeführt werden kann. Erfindungsgemäß wird der abschwenkbare Teil der Schuttrutsche in eine Position gefahren, in der er nahezu mit dem nicht abschwenkbaren Teil fluchtet. In dieser Position wird er verriegelt und der an den abschwenkbaren Teil anschließende untere teleskopierbare Teil wird ausgefahren. Nach Erreichen der Traufe wird die Verriegelung aufgehoben und der abschwenkbare Teil in der gewünschten Winkelstellung gegen das Dach abgeschwenkt. Die Erfindung bedient sich hierzu einer selbsttätig einrastenden Verriegelungsvorrichtung zwischen den beiden zueinander schwenkbaren Rutschenschüssen, die vom Boden aus bedienbar ist und mittels des gleichen Seiles, mit dem die Abschwenkung vorgenommen wird, auch wieder entriegelt wird.

In besonders vorteilhafter Ausgestaltung der Erfindung ist der abwinkelbare Rutschenschuß als eine oberseitig offene Rinne ausgebildet, die zudem noch teleskopierbar sein kann, wobei die Teleskopierbarkeit vorzugsweise von Hand vorgenommen wird. Dies hat den besonderen Vorteil, daß der abgeknickte Teil der Schuttrutsche gleichzeitig über seine gesamte Länge mit Abraum beladen werden kann, d.h. es ist nicht erforderlich, das Material jeweils bis an einen Einfülltrichter zu transportieren.

Die derart ausgebildeten abgewinkelten oberen Rutschenschüsse können in zusammengeschobenem Zustand über eine Schnellkupplung miteinander verbunden werden, wobei die Erfindung nicht verlassen wird, wenn gemäß Anspruch 19 dieser abwinkelbare Teil des Rutschenschusses über eine entsprechende Vorrichtung in den nicht abwinkelbaren Teil - beispielsweise zu Transportzwecken - einfahrbar ist.

Da es sich bei dem Teleskopieren der Rutschenschüsse und dem Abschwenken des oberen Schusses - insbesondere mit der Handhabung der Verriegelung -, um einander überlappende Bewegungen handelt, ist die Zuordnung der Seilspannvorrichtung nach den Ansprüchen 25 und 26 von besonderem Vorteil. Hierdurch kann das Fieren des Windenseiles von Hand besser auf das Ausfahren der Teleskopschüsse abgestimmt werden.

Es ist ersichtlich, daß mit der Lehre nach Anspruch 1 das Aufstellen einer Schuttrutsche mit auf dem Dach aufliegenden Schuttrutschenteilen vereinfacht wird, wobei keine besonderen Zwischenstücke zur Anpassung an unterschiedliche Dachneigungen erforderlich sind. Es ist weiter ersichtlich, daß schwierige Montagearbeiten im Bereich des Daches bzw. der Dachtraufe entfallen. Schließlich ist erkennbar, daß die Baulänge der gesamten Vorrichtung im eingefahrenen Zustand nicht oder nicht nennenswert vergrößert wird, da die unteren, bis zur Traufe reichenden teleskopierbaren Rutschenschüssen in eingefahrenem Zustand aufgrund ihrer Überlappung insgesamt noch eine Länge einnehmen, die dem oberen, abknickbaren Rutschenschuß entspricht.

Die Erfindung wird nachfolgend anhand zweier Ausführungsbeispiele näher erläutert.

Es zeigen:

Fig. 1    in perspektivischer Darstellung die Gesamtansicht der Schuttrutsche

Fig. 2    in einem ersten Ausführungsbeispiel in gegenüber Fig. 1 vergrößerter Darstellung den Abknickbereich gemäß Pfeilrichtung II der Fig. 1

Fig. 3    eine Ansicht in Pfeilrichtung III nach Fig. 2

Fig. 4    eine Seitenansicht des Abknickbereiches

Fig. 5    das vordere Ende der abgewinkelten Rutschenschüsse in eingeschobener Position

Fig. 6-10 in einer zweiten Ausführungsform den Abschwenkvorgang in verschiedenen Phasen, wobei Fig. 9 die in etwa gestreckte Lage in vergrößerter Darstellung zeigt

Fig. 11
und 12    die Spanneinrichtung zum Straffhalten des Windenseiles

In den einzelnen Fig. wurden gleiche Bauteile mit gleichen Bezugszeichen belegt; diese jedoch aus Gründen der Übersicht nicht in allen Figuren eingetragen.

Aus der Fig.1 ist die mit 1 bezeichnete Schuttrutsche ersichtlich, die in ihrem Grundaufbau aus einem Rutschenturm 2, welcher auf einem Fahrgestell 3 ruht, und den Rutschenschüssen a - h besteht.

Die Rutschenschüsse b, c, d, e und f gehören zum im wesentlichen vertikal teleskopierbaren Teil und sind mittels einer nicht dargestellten Vorrichtung ein- und ausfahrbar.

Die Rutschenschüsse g und h sind ebenfalls als Teleskopschüsse ausgebildet und bilden eine oben offene Rinne 30.

Andeutungsweise ist ein Gebäude 6 dargestellt, wobei die Abwinkelung der Schuttrutsche im Bereich der Traufe 8 erfolgt, so daß sich der abgewinkelte Teil auf das Dach 7 auflegen kann.

Der in Pfeilrichtung 32 in die Rinne 30 eingebrachte Abraum 4 wird über das Überleitknie 14 in den etwa vertikal verlaufenden Teil der Schuttrutsche geleitet und über den das Austragsende bildenden letzten Rutschenschuß a in ein Fahrzeug 5 verbracht.

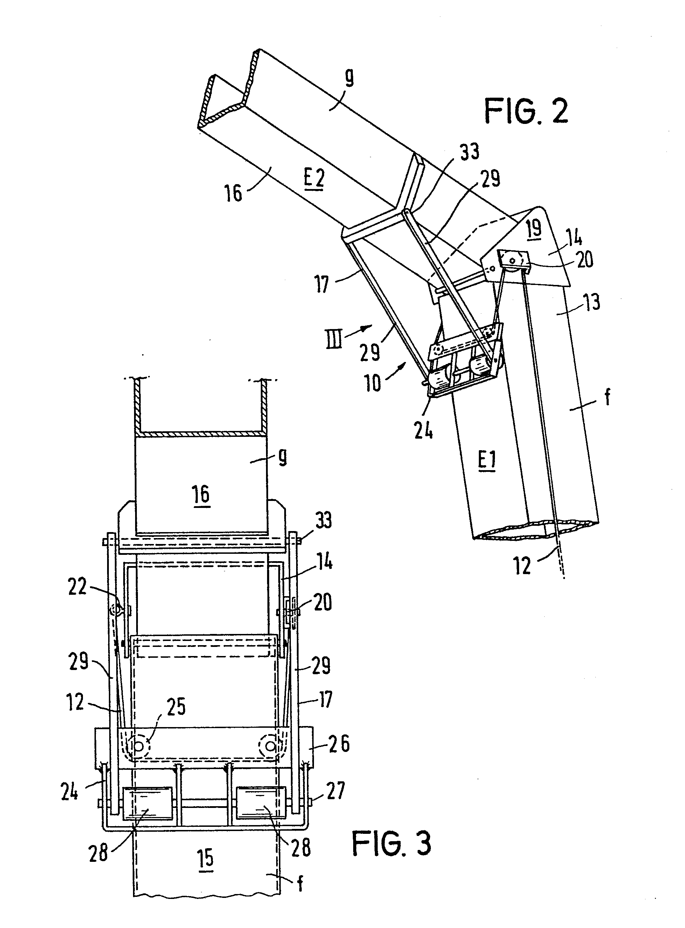

Aus der Fig. 1 ist weiter im Bereich des Fahrgestells 3 eine Winde 9 erkennbar, mittels der ein Windenseil 12 (Fig. 2) betätigt werden kann. Das Windenseil 12 führt zu einer Umlenkrolle 20, welche sich an einer Seite 19 des Überleitknies 14 befindet. Über die Umlenkrolle 20 ist das Seil 12 weiter zu einem Rollenkasten 26 (Fig. 3) geführt, in dem die Umlenkrollen 25 verlagert sind. Das um die Umlenkrollen 25 geführte Windenseil 12 verläuft weiter auf die andere Seite 23 des Überleitknies 14 und ist dort im Festpunkt 22 festgelegt.

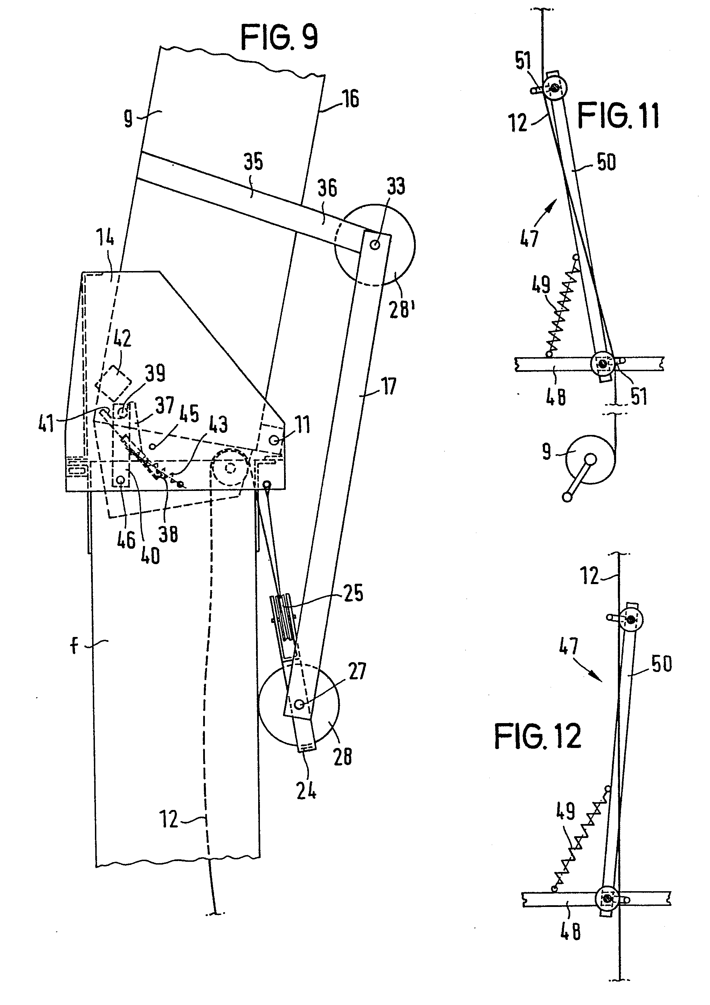

Wie die Fig. 11 und 12 aufweisen, ist dem Windenseil 12 eine Seilspannvorrichtung 47 zugeordnet. Sie dient insbesondere dazu, beim Ablassen des Windenseiles 12 von der Winde 9 (Fig. 1) bei gleichzeitigem Teleskopieren der Teleskopschüsse b - f das Windenseil straff zu halten. Hierzu ist an einer Strebe 48 des Rutschenturmes 2 ein Spannhebel 50 angelenkt, welcher ständig durch eine Feder 49 im Schwenksinne belastet ist. Der Spannhebel 50 trägt an seinen beiden Enden Seilführungsösen 51. Aus der Fig. 11 ist erkennbar, daß der Spannhebel 50 Seilhavarien vermeidet, sobald Schlaffseil eintritt; in der Fig. 12 ist das Seil in seiner gestreckten Situation bei gespanntem Spannhebel 50 dargestellt.

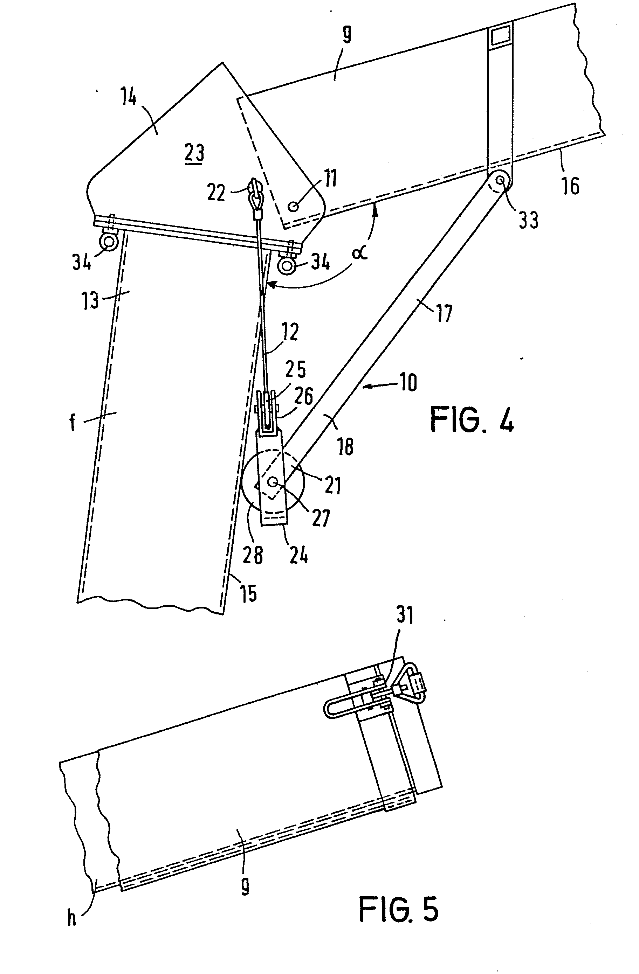

Der Rollenkasten 26 ist Bestandteil einer Schwinge 24, welche sich um die Schwenkachsen 27 dreht. Die Schwenkachse 27 bildet gleichzeitig die Tragachse für zwei Druckrollen 28, welche sich, wie aus den Fig. 2 und 4 erkennbar, an der Unterseite 15 des Rutschenschusses f abstützen. Da die Umlenkrolle 20 etwa im Bereich des oberen freien Endes 13 des Rutschenschusses f, nämlich am Überleitknie 14 angeordnet ist, bewirkt der Zug im Windenseil 12, daß die Druckrollen 24 in der Bildebene der Fig. 2 nach oben bewegt werden. Da die Schwenkachse 27 der Schwinge 24 in der aus zwei Druckstreben gebildeten Spreize 17 verlagert ist, wird das untere freie Ende 18 der Spreize 17 mitgenommen. Die Spreize 17 ist mit ihrem oberen Ende über Gelenke 33 verschiebungssicher an der Unterseite 16 des Rinnenschusses g festgelegt. Da einerseits die Schwenkachse 11, um die die beiden zueinander abwinkelbaren Rutschenschüsse f und g drehen, in etwa im Scheitelpunkt der Ebenen E1 der Unterseite 15 des Rinnenschusses f und E2 der Unterseite 16 des Rinnenschusses g liegt und sich andererseits das freie Ende 18 der beiden die Spreize 17 bildenden Druckstreben rollend oder gleitend entlang der Ebene E1 bewegt, wird die allgemein mit 10 bezeichnete Winkeleinstellvorrichtung bei Betätigen des Windenseiles den Winkel zwischen den Rutschenschüssen f und g ändern.

Wird das Seil nachgelassen, legt sich der Rutschenschuß g in etwa in eine parallele Lage zum Rutschenschuß f. Der mit     bezeichnete Knickwinkel kann somit beliebig eingestellt werden.

Aus den Fig. 6 - 10 sind die einzelnen Abschwenkphasen erkennbar. Darüber hinaus ist ersichtlich, daß der Spreize 17 eine weitere obere Druckrolle 28' zugeordnet ist und daß zwischen dem abschwenkbaren Rutschenschuß g und dem unterseitig daran anschließenden Rutschenschuß f eine Verriegelungsvorrichtung 44 vorgesehen ist.

Wie die vorgenannten Fig. ausweisen, ist der an dem abschwenkbaren Rutschenschuß angeordnete Stützträger 35 über die Unterseite 16 des Rutschenschusses hinweg verlängert ausgebildet. Er trägt an seinem freien Ende die obere Druckrolle(n) 28'. Aus der Fig. 6 ist ersichtlich, daß der abschwenkbare Rutschenschuß g sich maximal bis gegen die obere Druckrolle 28' anlegen kann. Die Druckrolle bildet somit einen Distanzhalter, welcher verhindert, daß der obere Rutschenschuß g bis über den toten Winkel abschwenkt. Gleichzeitig ist aus der Fig. 6 erkennbar, daß in der ersten Phase des Anhebens des oberen Rutschenschusses g die Druckrolle 28' die Hauptbelastung auffängt. Dies ist insbesondere dann wichtig, wenn (was in der Zeichnung nicht dargestellt ist) die an den Rutschenschuß f anschließenden unteren Rutschenschüsse b, c, d und e noch ineinandergeschoben sind. Dabei kann die Rolle 28' in vorteilhafter Weise die Stöße dieser Rutschenschüsse überfahren.

Die Fig. 7 zeigt eine Zwischenphase, bei der sich die miteinander zu verriegelnden Teile der Verriegelungsvorrichtung 44 einander nähern. Die Verriegelung 44 besteht im wesentlich aus einem an dem Überleitknie 14 angeordneten Hebel 40, welcher gegen die Kraft der Feder 43 um die Schwenkachse 46 drehbar ist und einen Riegelbolzen 39 trägt. Der Schwenkweg des Hebels 40 wird begrenzt durch den Anschlag 45.

Aus der Fig. 8 ist ersichtlich, daß das an dem oberen Rutschenschuß g angeordnete Führungsstück 37 mit seiner Führungsfläche 38 bereits an dem Riegelbolzen 39 entlanggeglitten ist und daß die Feder 43 den Riegelbolzen 39 nach Verlassen der Führungsfläche 38 gegen den Einführungsnocken 42 gezogen hat. Dies ist praktisch eine Anschlagsituation, bei der an der Winde ein entsprechender Widerstand erkennbar ist.

Bei geringfügigem Nachlassen stellt sich die Situation nach Fig. 9 ein, d.h. der Riegelbolzen 39 gleitet in die Riegelfalle 41 und verbleibt dort, solange das Windenseil, wie in Fig. 9 dargestellt, entsprechend lose gehalten wird.

Nach erneutem kurzen Anziehen des Windenseiles ergibt sich die in Fig. 10 dargestellte Position, d.h. der Schwenkhebel gleitet mit dem Riegelbolzen aufgrund des Federzuges aus der Riegelfalle heraus und umfährt die Riegelfalle in der dargestellten Weise. Nunmehr kann der obere Rutschenschuß g in beliebigen Winkelstellungen gegen das Dach abgeknickt werden.

Wie erkennbar, hat die untere Druckrolle 28 in den Positionen nach den Fig. 7 - 10 die Abstützung der Spreize 17 und damit den Andruck gegen den unterseitig anschließenden Rutschenschuß f übernommen.

Aus der Fig. 4 ist weiter ersichtlich, daß das Überleitknie 14 mittels Schraubverbindungen 34 an dem Rutschenschuß f befestigt ist; nach Lösen der Schraubverbindungen 34 kann der abwinkelbare Teil der Schuttrutsche einschließlich der Winkeleinstellvorrichtung 10 abgenommen und das Überleitknie 14 durch einen Einfülltrichter ersetzt werden, wenn die Schuttrutsche ohne abknickbaren Teil benutzt werden soll.

In der Fig. 5 ist dargestellt, daß der abwinkelbare Teil der Schuttrutsche, d.h. die oben offene Rinne 30 aus zwei ineinander einsteckbaren Teleskopschüssen g und h besteht, die durch Handbedienung teleskopierbar sind und in ihrem vorderen Bereich in eingeschobenem Zustand durch eine Schnellverriegelung 31 zu Transportzwecken kraftschlüssig miteinander verbunden werden können.

Bezugszeichenliste

| | | |
|---|---|---|
| 1 | = | Schuttrutsche |
| 2 | = | Rutschenturm |
| 3 | = | Fahrgestell |
| 4 | = | Abraum |
| 5 | = | Fahrzeug |
| 6 | = | Gebäude |
| 7 | = | Dach |
| 8 | = | Traufe |
| 9 | = | Winde |
| 10 | = | Winkeleinstellvorrichtung |
| 11 | = | Schwenkachse |
| 12 | = | Windenseil |
| 13 | = | oberes freies Ende des Rutschenschusses f |
| 14 | = | Überleitknie |
| 15 | = | Unterseite des Rutschenschusses f |
| 16 | = | Unterseite des Rutschenschusses g |
| 17 | = | Spreize |
| 18 | = | freies Ende der Spreize |
| 19 | = | eine Seite des Überleitknies 14 |
| 20 | = | Umlenkrolle |
| 21 | = | gleitend oder rollend abgestütztes Ende der Spreize 17 |
| 22 | = | Festpunkt |
| 23 | = | andere Seite des Überleitknies 14 |
| 24 | = | Schwinge |
| 25 | = | Umlenkrollen im Rollenkasten 26 |
| 26 | = | Rollenkasten |
| 27 | = | Schwenkachse der Schwinge 24 |
| 28 | = | untere Druckrolle(n) |
| 28' | = | obere Druckrolle(n) |

| | | |
|---|---|---|
| 29 | = | Druckstreben |
| 30 | = | Rinne |
| 31 | = | Schnellverriegelung |
| 32 | = | Pfeilrichtung |
| 33 | = | Gelenk |
| 34 | = | Schraubverbindungen |
| 35 | = | Stützträger |
| 36 | = | freies Ende des Stützträgers 35 |
| 37 | = | Führungsstück |
| 38 | = | (federnde) Führungsfläche |
| 39 | = | Riegelbolzen |
| 40 | = | Hebel |
| 41 | = | Riegelfalle |
| 42 | = | Einführungsnocken |
| 43 | = | Feder |
| 44 | = | Verriegelungsvorrichtung |
| 45 | = | Anschlag |
| 46 | = | Schwenkachse |
| 47 | = | Seilspannvorrichtung |
| 48 | = | Strebe des Rutschenturmes |
| 49 | = | Feder |
| 50 | = | Spannhebel |
| 51 | = | Seilführungsösen |
| a | = | Rutschenschuß |
| b | = | " |
| c | = | " |
| d | = | " |
| e | = | " |
| f | = | nicht schwenkender Rutschenschuß (unterseitig an g anschließender Rutschenschuß) |
| g | = | abschwenkbarer Rutschenschuß (oberer Rutschenschuß) |

h      =     Rutschenschuß =     Knickwinkel

E1     =     Ebene der Unterseite des Rutschenschusses f

E2     =     Ebene der Unterseite des Rutschenschusses g

Patentansprüche

1. Aus mehreren teleskopierbaren Rutschenschüssen gebildete Schuttrutsche für den Transport von Abraum vom Dachbereich über die Traufe zum Boden, dadurch gekennzeichnet, daß wenigstens ein oberer Rutschenschuß (g) gegenüber dem unterseitig daran anschließenden Rutschenschuß (f) mittels einer vom Boden bedienbaren Winde (g) abwinkelbar und der Knickwinkel ( ) mittels der gleichen Winde über eine zwischen den beiden Rutschenschüssen (g, f) angeordnete Winkeleinstellvorrichtung (19) in beliebigen Winkelstellungen festlegbar ist.

2. Schuttrutsche nach Anspruch 1, dadurch gekennzeichnet, daß der obere Rutschenschuß (g) und der unterseitig daran anschließende Rutschenschuß (f) über eine etwa in den Ebenen (E1, E2) der Unterseiten (15,16) der beiden Rutschenschüsse (g, f) liegende Schwenkachse abwinkelbar sind.

3. Rutschenschuß nach Anspruch 1, dadurch gekennzeichnet, daß an dem oberen freien Ende (13) des unterseitig an den oberen Rutschenschuß anschließenden Rutschenschusses ein Überleitknie (14) angeordnet ist.

4. Rutschenschuß nach Anspruch 3, dadurch gekennzeichnet, daß das Überleitknie (14) das Achslager für die Schwenkachse (11) bildet.

5. Rutschenschuß nach Anspruch 3 und 4, dadurch gekennzeichnet, daß das Überleitknie (14) undrehbar mit dem Rutschenschuß (f) verbunden ist.

6. Rutschenschuß nach Anspruch 3 - 5, dadurch gekennzeichnet, daß das Überleitknie (14) lösbar mit
dem Rutschenschuß (f) verbunden ist.

7. Rutschenschuß nach Anspruch 1, dadurch gekennzeichnet,
daß der das Überleitknie (14) aufweisende Rutschenschuß
(f) den oberen der mittels einer vom Boden bedienbaren Winde (nicht dargestellt) teleskopierbaren
Rutschenschüsse bildet.

8. Rutschenschuß nach Anspruch 1 und 7, dadurch gekennzeichnet, daß der obere Rutschenschuß (g) gegenüber
dem das Überleitknie (14) aufweisenden Rutschenschuß
(f) bis etwa zur Anlage an denselben abschwenkbar ist.

9. Rutschenschuß nach Anspruch 1, dadurch gekennzeichnet,
daß die Winkeleinstellvorrichtung (10) eine zwischen
den einander zugewandten Unterseiten (15, 16) des
oberen Rutschenschusses (g) und dem unterseitig
daran anschließenden Rutschenschuß (f) angeordnete
Spreize (17) aufweist.

10. Rutschenschuß nach Anspruch 1 und 9, dadurch gekennzeichnet, daß die Spreize (17) einenends unverschieblich und drehbar an dem oberen, vorzugsweise
an der Unterseite (16) des oberen, abwinkelbaren
Schusses (g) und anderenends mit ihrem freien
Ende (18) gleitend oder rollend an der Unterseite
(15) des unterseitig daran anschließenden Rutschenschusses (f) bzw. der daran anschließenden Rutschenschüsse (f - b) oder Anbauteilen desselben abgestützt
und/oder geführt ist.

- 3 -

11. Rutschenschuß nach Anspruch 10, dadurch gekennzeichnet, daß die gleitende oder rollende Abstützung der Spreize (17) an der Unterseite (15) des Rutschenschusses (f) bzw. der Rutschenschüsse (f-g) über eine vom Boden bedienbare handbetätigte Winde (9) erfolgt.

12. Rutschenschuß nach Anspruch 11, dadurch gekennzeichnet, daß das Windenseil (12) der vom Boden bedienbaren Winde (9) über eine an einer Seite (19) des Überleitknies (14) über dem freien Ende (18) der Spreize (17) angeordnete Umlenkrolle (20) zum gleitend oder rollend abgestützten Ende (21) der Spreize und weiter zu einem gegenüberliegenden Festpunkt (22) an der anderen Seite (23) des Überleitknies geführt ist.

13. Rutschenschuß nach Anspruch 1 und 9 - 12, dadurch gekennzeichnet, daß am unteren freien Ende (18) der Spreize (17) ein Bestandteil einer Schwinge (24) bildender, die Umlenkrollen (25) für das Schwenkseil aufnehmender Rollenkasten (26) angeordnet ist, wobei die freien Enden (18) der Spreize (17) sowohl die Achslager für die Schwenkachse (27) der Schwinge (24) als auch für wenigstens eine an der Unterseite (15) des Teleskopschusses (f) abgestützte, auf der Schwenkachse (27) verlagerte Druckrolle (28) bilden.

14. Schuttrutsche nach Anspruch 13, dadurch gekennzeichnet, daß auf der Schwenkachse (27) bzw. dem Gelenk (33) zwei Druckrollen (28) in Nebeneinanderanordnung verlagert sind.

15. Schuttrutsche nach Anspruch 9, dadurch gekennzeichnet, daß die Spreize (17) aus zwei parallel zueinander verlaufenden Druckstreben (29) besteht.

16. Schuttrutsche nach Anspruch 1, 9 und 10, dadurch gekennzeichnet, daß das freie Ende (36) eines am oberen Rutschenschuß (g) angeordneten Stützträgers (35) bis über die Unterseite (16) des Rutschenschusses hinaus verlängert ist und das Lager für wenigstens eine obere Druckrolle (28') bildet.

17. Rutschenschuß nach Anspruch 1, dadurch gekennzeichnet, daß zwischen dem abschwenkbaren Rutschenschuß (g) und dem unterseitig daran anschließenden, nicht schwenkbaren Rutschenschuß eine Verriegelungsvorrichtung (44) (Riegelfalle (41), Riegelbolzen (39)) vorgesehen ist.

18. Schuttrutsche nach Anspruch 1 und 17, dadurch gekennzeichnet, daß die Verriegelungsvorrichtung (44) mittels des vom Boden bedienbaren Windenseiles (12) einrastbar und ausrastbar ist.

19. Schuttrutsche nach Anspruch 1, 3, 17 und 18, dadurch gekennzeichnet, daß die Verriegelungsvorrichtung (44) am Überleitknie (14), vorzugsweise an einer Außenseite (19 bzw. 23) des Überleitknies angeordnet ist.

20. Schuttrutsche nach Anspruch 1, 3 und 17 - 19, dadurch gekennzeichnet, daß die Verriegelungsvorrichtung (44) aus einem am Überleitknie (14) schwenkbar verlagerten federbelasteten Hebel (40) mit Riegelbolzen 39) und einem am schwenkbaren Teleskopschuß (g) angeordneten Führungsstück (37) mit Riegelfalle (41) und Einführungsnocken (42) besteht, und daß die Schwenkachse (46) des Hebels (40) achsparallel zur Schwenkachse (11) des Rutschenschusses (g) verläuft.

21. Schuttrutsche nach Anspruch 1, 3 und 17 - 20, <u>dadurch gekennzeichnet,</u> daß die Verriegelungsvorrichtung (44) bei Annäherung der beiden zueinander verschwenkbaren Teleskopschüsse (g und f) an die gestreckte Position nach "zu Block fahren" gegen den Einführungsnocken (42) selbstätig einrastet und durch geringfügig weiteres Einfahren ausrastbar ist.

22. Schuttrutsche nach Anspruch 9, <u>dadurch gekennzeichnet,</u> daß das untere freie Ende (18) der Spreize in einer pendelnd am Überleitknie (14) und/oder dem Rutschenschuß (f) angeschlossenen Gleitführung (nicht dargestellt) zwangsgeführt ist.

23. Schuttrutsche nach Anspruch 1, <u>dadurch gekennzeichnet,</u> daß der abwinkelbare Rutschenschuß (g bzw. h) eine oberseitig offene Rinne (30) ist.

24. Schuttrutsche nach Anspruch 1 und 23, <u>dadurch gekennzeichnet,</u> daß der obere abwinkelbare Rutschenschuß (g) der Aufnahme eines Teleskopschusses (h) dient.

25. Schuttrutsche nach Anspruch 1, <u>dadurch gekennzeichnet,</u> daß der abwinkelbare Rutschenschuß (g) als in den unterseitig daran anschließenden Teleskopschuß (f) einfahrbarer Teleskopschuß ausgebildet ist.

26. Schuttrutsche nach Anspruch 1 und 24, <u>dadurch gekennzeichnet,</u> daß die beiden als offene Rinne (30) ausgebildeten abwinkelbaren Rutschenschüsse (g und h) an ihren oberen Enden mittels einer Schnellverriegelung (31) miteinander verbindbar sind.

27. Rutschenschuß nach Anspruch 1, dadurch gekennzeichnet, daß dem der vom Boden bedienbaren Winde (9) zugeordneten Windenseil (12) eine am Rutschenturm (2) angeordnete Seilspannvorrichtung (47) zugeordnet ist.

28. Rutschenschuß nach Anspruch 27, dadurch gekennzeichnet, daß die Seilspannvorrichtung (47) aus einem schwenkbar an einer Strebe (48) des Rutschenturmes (2) angelenkten, durch eine Feder (49) in Spannstellung gehaltenen und mit Seilführungsösen (51) versehenen Spannhebel (50) besteht.

FIG.1

0201847

FIG. 2

FIG. 3

0201847

FIG. 4

FIG. 5

0201847

FIG. 6

FIG. 7

FIG. 8

FIG. 10

**FIG. 9**

**FIG. 11**

**FIG. 12**